(19) Europäisches Patentamt

European Patent Office

Office européen des brevets

(11) EP 0 813 350 A2

(12) **EUROPÄISCHE PATENTANMELDUNG**

(43) Veröffentlichungstag:
17.12.1997 Patentblatt 1997/51

(51) Int. Cl.⁶: **H04R 29/00**

(21) Anmeldenummer: 97106053.8

(22) Anmeldetag: 12.04.1997

(84) Benannte Vertragsstaaten:
DE ES FR GB IT

(30) Priorität: 14.06.1996 DE 19623715

(71) Anmelder: Hagenuk Telecom GmbH
24118 Kiel (DE)

(72) Erfinder:
• Stieper, Bruno
24119 Kronshagen (DE)

• Brandt, Peter
24214 Schinkel (DE)

(74) Vertreter:
Hansmann, Dierk, Dipl.-Ing. et al
Patentanwälte
Hansmann-Klickow-Hansmann
Jessenstrasse 4
22767 Hamburg (DE)

(54) **Vorrichtung zur Messung der Charakteristik eines Mikrofons**

(57) Die Vorrichtung zur Messung der Charakteristik eines Mikrofons, insbesondere eines Druck- oder Richtmikrofons, unter Freifeldbedingungen zeichnet sich dadurch aus, daß ein rohrförmiger Schallwellenleiter vorgesehen ist, mit dem ein Schallfeld mit im wesentlichen ebenen Wellenfronten erzeugt wird, in dem das Mikrofon zur Messung angeordnet ist. Zur Vermeidung stehender Wellen ist der Schallwellenleiter mit einem reflexionsfreien Abschluß versehen, der durch einen mit einem schallabsorbierenden Material gefüllten Endabschnitt des Rohres gebildet ist. Auf diese Weise ist es möglich, mit einem vergleichsweise sehr kleinen Messaufbau Messungen unter Idealbedingungen, das heißt mit weitestgehend ebenen Wellenfronten durchzuführen, die ansonsten nur in einem schalltoten Raum erzeugt werden können.

FIG.1

**Beschreibung**

Die Erfindung betrifft eine Vorrichtung zur Messung der Charakteristik eines Mikrofons, insbesondere eines Druck- oder Richtmikrofons, unter Freifeldbedingungen mit im wesentlichen ebenen Wellenfronten.

Die ständig wachsenden Qualitätsanforderungen sowie die Wandlung der industriellen Fertigung elektronischer Geräte zu einer nahezu vollautomatischen Serienproduktion mit hoher Komplexität macht es erforderlich, daß die einzelnen Bauelemente und Baugruppen schnell, zuverlässig und genau auf ihre Funktion überprüft werden können.

In diesem Zusammenhang stellt die Prüfung von Mikrofonen und die Messung ihrer Charakteristik häufig ein Problem dar, da reproduzierbare Daten nur unter Freifeldbedingungen erzielbar sind und zur Schaffung dieser Bedingungen im allgemeinen ein schalltoter Raum mit relativ großem Volumen und aufwendiger Innenverkleidung erforderlich ist.

Vergleichbare Meßmethoden anderer Hersteller ermöglichen zwar auch eine zumindest qualitative Beurteilung von Mikrofonen, erfordern jedoch einen relativ großen Versuchsaufbau und sind häufig nur von geschultem Personal durchzuführen und außerdem sehr teuer.

In einem Katalog "Meßgeräte zur Schall-, Schwingungs- und Signalanalyse" der Firma Brüel & Kjaer von 1980 wird eine schalltote Audio-Prüfkammer beschrieben, die zur Messung des Frequenzgangs, von Verzerrungen und der Verstärkung von Hörgeräten und kleinen Mikrofonen dient. Diese Kammer ist jedoch recht groß und für einen mobilen Einsatz nur bedingt geeignet. Ferner ist eine Messung der Charakteristik von Richtmikrofonen mit relativ großen Fehlern behaftet, da hierfür ebene Schallwellenfronten benötigt werden, die ausschließlich aus einer genau definierten Richtung auf das Mikrofon einfallen. Beides ist mit dieser bekannten Prüfkammer nicht mit der erforderlichen Genauigkeit erreichbar, da die Entfernung zwischen Schallquelle und Prüfobjekt zu gering und die Dämpfung innerhalb der Kammer nicht hoch genug ist.

Der Erfindung lag deshalb die Aufgabe zugrunde, eine Vorrichtung zur Messung der Charakteristik eines Mikrofons unter Freifeldbedingungen mit im wesentlichen ebenen Wellenfronten zu schaffen, die einfach handhabbar und kostengünstig ist.

Gelöst wird diese Aufgabe bei der eingangs genannten Vorrichtung dadurch, daß ein rohrförmiger Schallwellenleiter vorgesehen ist, mit dem ein Schallfeld erzeugt wird, in dem das Mikrofon zur Messung seiner Charakteristik angeordnet ist.

Ein Vorteil dieser Lösung besteht darin, daß die Vorrichtung sehr klein ist und somit leicht gehandhabt und transportiert werden kann, so daß sie an verschiedenen Orten, zum Beispiel einer Wareneingangskontrolle oder Fertigungsüberwachung einsetzbar ist. Außerdem sind die Wellenfronten der Schallwellen in wesentlich stärkerem Maße eben, so daß eine genauere Messung von Richtmikrofonen möglich ist.

Die Vorrichtung ist ferner mit einem standardisierten Meßaufbau betreibbar, so daß keine besonders geschulten Fachkräfte zur Durchführung der Messungen erforderlichen sind, sondern nur die jeweils zu messenden Mikrofone eingesetzt bzw. ausgetauscht werden müssen. Vorteilhafte Weiterbildung des Erfindungsgedankens werden in den Unteransprüchen beschrieben.

Danach kann der Schallwellenleiter insbesondere ein Rohr sein. Dessen akustische Eigenschaften haben sich im Zusammenhang mit der Erfindung als besonders vorteilhaft herausgestellt. Dies betrifft in erster Linie die Tatsache, daß mit einem Rohr eine in hohem Maße ebene Schallwelle erzeugt werden kann, wie sie nicht einmal von sehr großen schwingenden Platten (Kolbenstrahlern) abgegeben wird. Zudem erhält man ebene Schallwellen erst dann, wenn man sich in einer relativ großen Entfernung von der Schallquelle befindet, da hier die Kugeloberflächen der sich kugelförmig ausbreitenden Wellen nur noch sehr schwach gekrümmt sind. Schließlich ist in einem Rohr eine gegenüber äußeren Störeinflüssen weitgehend abgeschirmte Schallwellenausbreitung möglich.

Das Mikrofon wird in diesem Falle vorzugsweise innerhalb des Rohres angeordnet. Es ist somit ausschließlich dem sich innerhalb des Rohres ausbreitenden Schallfeld ausgesetzt und vor Störgeräuschen weitgehend abgeschirmt.

An einer Eingangsöffnung des Rohres befindet sich vorzugsweise ein Lautsprecher, der zur Erzeugung des Schallfeldes an einen entsprechenden Tongenerator angeschlossen ist.

Da das Rohr aus praktischen Gründen nicht unendlich lang sein kann, kann es zur Vermeidung von stehenden Wellen innerhalb des Rohres mit einem im wesentlichen reflexionsfreien Abschluß versehen sein.

Ein solcher Abschluß wird vorzugsweise durch einen Endabschnitt des Rohres gebildet, der mit einem schallabsorbierenden Material gefüllt ist.

Das schallabsorbierende Material kann porös, insbesondere Watte sein.

Damit ist es möglich, das Rohr mit einer Impedanz abzuschließen, die gleich der Leitungsimpedanz ist, so daß es nicht zur Ausbildung von stehenden Wellen kommen kann. Der Reflexionsfaktor ist in diesem Falle gleich Null. Poröse Stoffe haben den Vorteil, daß sie besonders schallabsorbierend sind und somit die einfallende Schallwelle fast vollständig in Wärmeenergie umwandeln.

Wenn zudem der Übergang von Luft in das Absorbermaterial fließend erfolgt, so daß jeweils zwei dicht nebeneinanderliegende Querschnittsflächen des Rohres fast die gleiche Schallimpedanz aufweisen, treten keine meßbaren Reflexionen auf.

Zur Messung der Charakteristik des Mikrofons ist vorzugsweise neben diesem ein Referenzmikrofon angeordnet.

Zur Messung der Richtcharakteristik sind die Mikrofone (Prüflinge) vorzugsweise drehbar innerhalb des Rohres gelagert.

Bei einer besonderen Ausführungsform, die insbesondere zur Messung von Telefonmikrofonen geeignet ist, die in einem Frequenzbereich zwischen etwa 300 Hz und 4 kHz arbeiten, hat das Rohr einen Innendurchmesser von etwa 4 cm und eine Länge von etwa 80 cm, wobei der Abstand zwischen dem an der Eingangsöffnung angeordneten Lautsprecher und dem Mikrofon in dem Rohr etwa 50 cm beträgt.

Der Abschluß kann dabei durch einen mit einem schallabsorbierenden Material gefüllten Abschnitt des Rohres mit einer Länge von etwa 30 cm gebidet sein, vor dem das Mikrofon angeordnet ist.

Zur Sichtkontrolle der Mikrofone ist das Rohrmaterial vorzugsweise Plexiglas, so daß Fehlmessungen zum Beispiel bei falsch adaptierten Mikrofonen vermieden werden.

Weitere Einzelheiten und Vorteile der Erfindung ergeben sich aus der nachfolgenden Beschreibung einer bevorzugten Ausführungsform anhand der Zeichnung. Es zeigen:

Figur 1      eine Prinzipdarstellung des Meßprinzips, nach dem die erfindungsgemäße Vorrichtung arbeitet,

Figur 2      eine schematische Darstellung einer bevorzugten Ausführungsform der Erfindung **und**

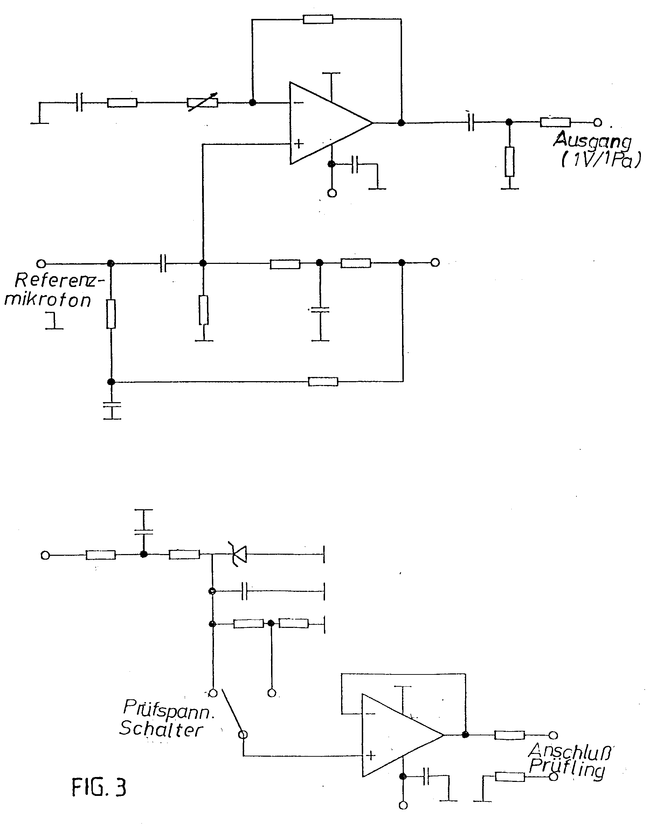

Figur 3      eine elektronische Schaltung eines erfindungsgemäßen Messeaufbaus.

Zur Verdeutlich des der Erfindung zugrundeliegenden Prinzips sollen zunächst einige Grundsätze zur Schallleitung in Rohren erläutert werden.

Mit einem Rohr, welches parallel zur Ausbreitungsrichtung einer ebenen Schallwelle angeordnet ist, kann ein Teil aus dieser "herausgeschnitten" werden, ohne das Wellenfeld dabei zu verändern. Voraussetzung ist, daß die Querabmessungen des Rohres klein gegenüber der Wellenlänge des Schalls sind. Die Schallwelle im Rohr ist durch die Rohrwand gegen Störungen von außen geschützt. Die ungestörte, genau definierbare

Schallausbreitung in Rohren kann man sich in der akustischen Messtechnik zu Nutze machen. Darüberhinaus kann das Rohr auch dazu dienen, eine ebene Schallwelle zu erzeugen. Im freien Raum erhält man ebene Schallwellen erst dann, wenn man sich in relativ großer Entfernung von der Schallquelle befindet, da erst hier die Kugeloberflächen der sich kugelförmig von der Schallquelle ausbreitenden Schallwellen nur noch sehr schwach gekrümmt sind. Eine wesentlich bessere Annäherung an eine ebene Schallwelle ist mit einem Rohr erzielbar, das außerdem wesentlich kürzer sein kann, als die Entfernung, die zur Erzielung vergleichbar ebener Schallwellen von einer Schallquelle eingehalten werden müßte. Die einzigen Bedingungen, die dafür an das Rohr zu stellen sind, sind:

a) der Rohrquerschnitt muß klein gegenüber der Wellenlänge sein und

b) das Rohr muß reflexionsfrei abgeschlossen sein (d.h. die Abschlußimpedanz muß gleich der Leitungsimpedanz sein).

Abgesehen von einer sehr dünnen Schicht von wenigen 1/10 mm in der Nähe der Rohrwand, in der die schwingenden Luftteilchen eine nicht so große Auslenkung erfahren, wie in der übrigen Querschnittsfläche des Rohrs, erhält man Wellenfronten (Flächen konstanter Phase), die senkrecht zur Rohrachse verlaufen. Schalldruck und Schallschnelle besitzen in einer Wellenfront konstante Amplituden. Wie später noch erläutert wird, spielt die zusätzlich auftretende Rohrdämpfung bei der Messung von Mikrofonen im Rohr keine Rolle. Eine solche ebene Schallwelle macht auch eine eindeutige Untersuchung von Richtmikrofonen möglich, so daß deren Richtcharakteristik ebenfalls mit der erfindungsgemäßen Vorrichtung ermittelt werden kann. Man spart dadurch sehr viel Platz, da man ansonsten für vergleichbare Verhältnisse eine relativ große schalldichte Kammer benötigt.

Voraussetzung hierfür ist jedoch, wie oben erläutert wurde, ein möglichst reflexionsfreier Abschluß des Rohres. Der Reflexionsfaktor r ist definiert als das Verhältnis des Schalldrucks $p_r$ der reflektierten Schallwelle zum Schalldruck $p_e$ der einfallenden Schallwelle. In diesem Zusammenhang sind für den Fall, in dem das schallführende Medium in dem Rohr Luft ist, im wesentlichen drei Fälle zu unterscheiden:

1.) Das Rohr ist mit einem starren, festen Deckel verschlossen. In diesem Fall spricht man von einem schallhart abgeschlossenen Rohr ($Z_{02}$ = ¥). Beschallt man das Rohr vom anderen (offenen) Ende mit einem Lautsprecher, so bilden sich innerhalb des Rohres stehende Wellen durch Überlagerung der einfallenden mit der am Ende reflektierten Welle aus. Am Rohrende ist die Schallschnelle immer Null, während die Knoten des Schalldrucks bei jedem ungradzahligen Vielfachen von einem Viertel der Wellenlänge und die Druckbäuche bei jedem ganzzahligem Vielfachen einer halben Wellenlänge liegen. Die Maximalwerte der Schallschnelle sind um ein Viertel der Wellenlänge gegenüber dem Druck verschoben. Der Reflexionsfaktor r ist 1.

3

2.) Läßt man das Rohr an seinem Ende offen, so spricht man von einem schallweich abgeschlossenen Rohr ($Z_{02}$ = 0). Ebenso wie bei einem schallharten Abschluß kommt es auch hierbei zur vollständigen Reflexion und somit zur Ausbildung von stehenden Wellen. Am Rohrende ist jedoch der Schalldruck immer Null, während die Schalldruckbäuche bei jedem ungradzahligen Vielfachen eines Viertels der Wellenlänge und die Knoten bei jedem ganzzahligem Vielfachen der halben Wellenlänge liegen. Der Reflexionsfaktor r ist -1.

Tritt einer dieser beiden Fälle auf, d. h. das Rohr ist entweder offen oder fest verschlossen, so kommt es zur Ausbildung von stehenden Wellen innerhalb des Rohres, die zur Untersuchung von Richtmikrofonen nicht geeignet sind, da der Schall in einem solchen Fall gar keine Richtung aufweist.

3.) Der einzige Fall, den man für die Untersuchung von Mikrofonen gebrauchen kann, ist der, bei dem das Rohr mit einem Stoff endlicher Schallimpedanz abgeschlossen ist. Sofern diese Abschlußimpedanz $Z_{02}$ gleich der Leitungsimpedanz $Z_{01}$ ist (Anpassung), entstehen keine Reflexionen und somit auch keine stehenden Wellen. Der Reflexionsfaktor $r = (Z_{02} - Z_{01}) / (Z_{02} + Z_{01})$ ist in diesem Falle gleich Null. Man erhält somit eine in dem Rohr fortschreitende, ebene Welle, die eine eindeutige Richtung aufweist und ideal zur Untersuchung von Mikrofonen geeignet ist.

Die Schwierigkeit hierbei besteht darin, einen Stoff zu finden, der die gleiche oder eine sehr ähnliche Schallimpedanz aufweist, wie Luft ($Z_{0Luft} = 408$ Ns/m$^5$ ).

Hierfür bieten sich poröse Stoffe an, die den Vorteil haben, gleichzeitig schallabsorbierend zu sein, so daß sich die einfallende Schallwelle möglichst vollständig in Wärmeenergie umwandeln kann. Wichtig ist hierbei, darauf zu achten, daß der Übergang von Luft in das Absorbermaterial nicht zu plötzlich erfolgt, sondern fließend, so daß zwei dicht nebeneinanderliegende Querschnittsflächen des Rohres fast die gleiche Schallimpedanz besitzen und somit keine Reflexion des Schalls zulassen. Je länger dieser Übergangsbereich ist, desto größer ist der Anteil der in Wärme umgewandelten Schallenergie und desto geringer die Reflexion. Besondern wichtig ist jedoch die Tatsache, daß sich die Schallimpedanzen des Absorbermaterials und der Luft bei diesem Übergang kaum voneinander unterscheiden. Je weicher der Übergang zwischen der Luft und dem Absorbermaterial ist, desto geringer sind die Unterschiede der Schallimpedanzen und desto geringer ist der Reflexionsfaktor.

Ein poröser Stoff, mit dem man diesen Übergang gut erreichen kann, ist Watte. Watte läßt sich praktisch beliebig lockern formen, läßt sich sehr gut verarbeiten und ist äußerst preisgünstig. Mit Watte ist somit auf sehr kostengünstige und schnelle Art und Weise ein geeigneter Rohrabschluß herstellbar. Ein Nebeneffekt des absorbierenden Materials als Rohrabschluß ist der Vorteil, daß störende Geräusche von hinten, die die Messung einer Richtcharakteristik außerordentlich unzuverlässig machen würden, ausgeblendet werden.

Vor diesem Hintergrund soll nun im Detail auf eine bevorzugte Ausführungsform der Erfindung eingegangen werden.

Die Messung der Empfindlichkeit eines Mikrofons erfolgt in Dezibel (dB), bezogen auf 1 V / 1 Pa. Die Empfindlichkeit eines Mikrofons, welches bei einem Schalldruck von 1 Pa eine Spannung von 1 V abgibt, beträgt 0 dB. Um die Empfindlichkeit eines Mikrofons messen zu können, benötigt man eine geeignete Referenz, auf die man sich beziehen kann. Hierbei gibt es zwei Möglichkeiten. Entweder benutzt man die Referenz dazu, eine Schallquelle genau auf 1 Pa Schalldruck in einem bestimmten Abstand einzustellen und mißt dann an dem Prüfmikrofon die Spannung und errechnet dessen Empfindlichkeit, oder man benutzt die Referenz dazu, um ein Referenzmikrofon zu kalibrieren, so daß dieses bei einem Schalldruck von 1 Pa genau 1 V liefert, wobei man eine Verhältnismessung mit dem Prüfmikrofon durchführt.

Bei der erfindinngsgemäßen Ausführungsform soll die letztgenannte Methode Anwendung finden, da sie einige Vorteile gegenüber der erstgenannten aufweist. Wenn das Referenzmikrofon auf 1 V / 1 Pa kalibriert ist, so ist es nämlich völlig gleichgültig, welchen Schalldruck die Schallquelle liefert, da die angegebenen Spannungen zueinander ins Verhältnis gesetzt werden und die Änderungen somit keine Rolle mehr spielen. Der Schalldruck muß sich lediglich innerhalb des Arbeitsbereiches der Mikrofone befinden.

Unter der Annahme, daß die Schallquelle genau 1 Pa in einem Abstand von einem Meter erzeugt und sich das Referenz- und das Prüfmikrofon in diesem Abstand von der Schallquelle befinden, sei angenommen, daß das Prüfmikrofon 0,1 V und das Referenzmikrofon genau 1 V (gemäß obiger Kalibrierung) erzeugt. In diesem Fall errechnet sich die Empfindlichkeit zu 20 log {(0,1 V / 1 Pa) / (1 V / 1Pa)} = -20 dB .

Ändert sich der Schalldruck zum Beispiel durch Spannungsschwankungen am Lautsprecher oder infolge eines nichtlinearen Frequenzgangs des Lautsprechers aufgrund von Veränderungen der Frequenz, so ändert sich die ermittelte Empfindlichkeit nicht, da die Spannung proportional zum Druck ist. Aus diesem Grund kann man die Empfindlichkeit eines Mikrofons unabhängig vom Schalldruck messen, solange überhaupt ein Schalldruck vorhanden ist.

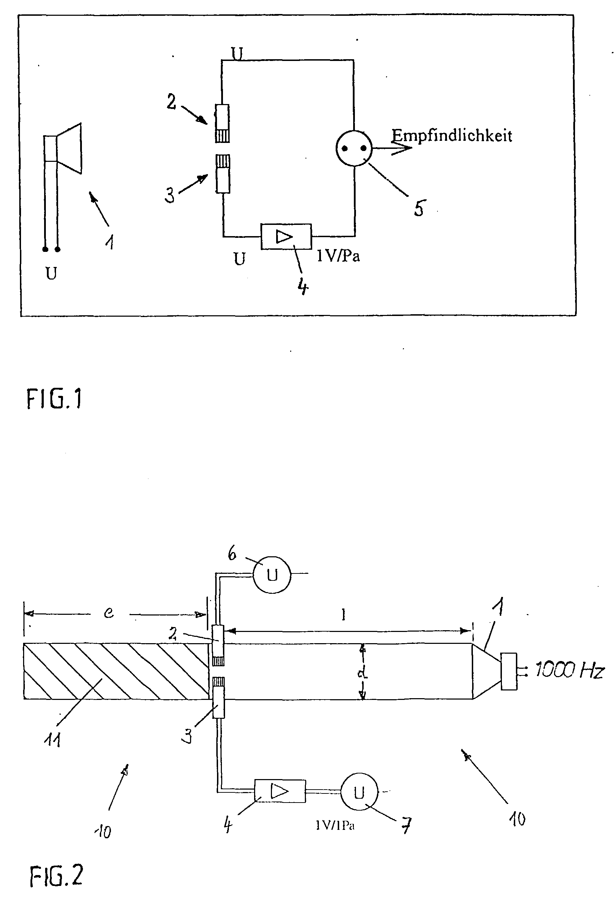

Dieses Meßprinzip ist in Figur 1 schematisch dargestellt. Der von einem Lautsprecher 1 erzeugte Schalldruck wirkt in gleichem Umfang auf ein Prüfmikrofon 2 sowie ein in unmittelbarer Nähe dazu angeordnetes Referenzmikrofon 3 ein. Das Referenzmikrofon 3 ist an einen Verstärker 4 angeschlossen und erzeugt nach der Kalibrierung eine Ausgangsspannung von einem 1 V pro 1 Pa. Diese Spannung wird zusammen mit der Ausgangsspannung des Prüfmikrofons 2 einer Divisionstelle 5 zugeführt, mit der die beiden Spannungen durcheinander dividiert werden. Der Ausgangswert stellt die oben erläuterte Empfindlichkeit dar.

Um nach diesem Prinzip Richtmikrofone untersuchen zu können, muß sichergestellt sein, daß der Schall nur aus einer Richtung auf die Mikrofone auftrifft. Wenn man ein Richtdiagramm des Prüfmikrofons aufnehmen möchte, muß dieses drehbar gelagert sein, um aus allen Richtungen beschallt werden zu können. Wenn die Messung in dem oben genannten Rohr durchgeführt wird, müssen sowohl das Referenzmikrofon, als auch das Prüfmikrofon im gleichen Abstand von der Schallquelle im Rohr angeordnet sein. Im Hinblick auf die Abmessungen des Rohres ist zu beachten, daß dessen Durchmesser nicht größer sein darf, als die halbe Wellenlänge des Schalls. Bei der Untersuchung von Mikrofonen für Telefone sind zum Beispiel nur die Frequenzen zwischen etwa 100 Hz und 4 kHz interessant. Da der Schall bei 4 kHz die kleinste Wellenlänge aufweist, stellt dieser Wert die Berechnungsgrundlage für den Durchmesser d des Rohres dar. Einer Frequenz f von 4 kHz entspricht eine Wellenlänge von 8,6 cm. Die halbe Wellenlänge ist demnach 4,3 cm, so daß das Rohr einen Innendurchmesser von höchstens 4,3 cm haben darf. Vorzugsweise wird ein Rohr mit einem Innendurchmesser von 4 cm gewählt. Ein solches Rohr hat eine obere Grenzfrequenz $f_g = c / 2d = 4290 \, Hz$ .

Die Länge des Rohres wird durch zwei Größen bestimmt: Zum einen ist die Länge des Absorbers (des Rohrabschlusses an seinem einen Ende), zum anderen der Abstand der beiden Mikrofone vom Lautsprecher zu berücksichtigen.

Bei genormten Freifeldversuchen wählt man einen Abstand der Mikrofone zum Lautsprecher von 50 cm, um nicht im Nahfeld des Lautsprechers messen zu müssen. Außerdem ist bei diesem Abstand die Kugeloberfläche der Schallwellen nahezu eben. Vorzugsweise wird im Rohr ebenfalls ein Mikrofonabstand von 50 cm gewählt. In einem Rohr wird zwar schon in geringerer Entfernung vom Lautsprecher eine ebene Welle erzeugt, es erscheint jedoch sinnvoll mit einem solchen "Sicherheitsabstand" eine Blindleistungskomponente des Schalls zu berücksichtigen, die durch die mitschwingende Mediummasse bedingt ist.

Messungen an einem Testrohr (herkömmliches PVC-Rohr) zeigten, daß die Empfindlichkeit der Richtmikrofone von der Entfernung zum Lautsprecher abhängt.

Aus diesen Gründen wählt man vorzugsweise den in Figur 2 gezeigten Messaufbau. Ein Rohr 10 mit einem Durchmesser d von etwa 4 cm ist mit einem Absorber 11 abgeschlossen, der durch einen mit dem oben genannten Dämpfungsmaterial gefüllten Endbereich e des Rohres von etwa 30 cm Länge gebildet ist. Unmittelbar vor diesem "schallweichen" Abschluß befindet sich das Prüfmikrofon 2 sowie das Referenzmikrofon 3. Dieses Mikrofon ist gemäß Figur 1 zur Kalibrierung an den Verstärker 4 angeschlossen, wobei an den Multimetern 6 und 7 die Spannungen an den beiden Mikrofonen abgelesen werden können. Vor den Mikrofonen erstreckt sich eine freie Länge l des Rohres, in der sich die von dem Lautsprecher 1 ausgehenden Schallwellen in Richtung auf die Mikrofone ausbreiten.

Als Meßobjekt wurde ein Back-Elektret-Richtmikrofon, als Referenzmikrofon ein Druckmikrofon der Firma Sennheiser vom Typ KE4 mit Verstärker für 1 V / 1 Pa gewählt. Der Abstand l der Mikrofone vom Lautsprecher wurde verändert und die Empfindlichkeit des Prüfmikrofons 2 bei einer Schallfrequenz von 1000 Hz mit Hilfe der zwei Multimeter 6, 7 oder mit Hilfe eines FFT-Analyzers ermittelt. Bei einem Testaufbau ergaben sich folgende Messwerte:

| Abstand l [cm] | Empfindlichkeit* in Vorwärtsrichtung [dB] | Empfindlichkeit* in Rückwärtsrichtung [dB] |
|---|---|---|
| 50 | -43,9 | -55,3 |
| 40 | -43,8 | -55,4 |
| 30 | -43,9 | -55,5 |
| 20 | -44,2 | -52,3 |
| 10 | -43,5 | -58,1 |

\* Empfindlichkeiten sind bezogen auf 1 V / 1 Pa

Hierbei bedeutet Vorwärtsrichtung, daß die Mikrofone mit der Membran zum Lautsprecher gerichtet sind. Bei Rückwärtsrichtung sind die Mikrofone um 180° gedreht.

Aus der Tabelle ergibt sich, daß bei einer Entfernung von 30 bis 50 cm die Meßwerte nahezu gleich sind, während sie bei geringerem Abstand (bis 20 cm) sehr ungenau werden. Betrachtet man die Frequenzgänge (in diesem Fall in Rückwärtsrichtung) bei 10 cm und bei 50 cm, so erkennt man starke Unregelmäßigkeiten im Frequenzverlauf, wenn der Abstand zum Lautsprecher zu gering wird.

Ein Abstand von 50 cm vom Lautsprecher ist somit vorzuziehen. Im Hinblick auf die Länge des Absorbers am Ende des Rohres ist zu berücksichtigen, daß dieser im Idealfall unendlich lang sein müßte, um alle Frequenzen reflexionsfrei zu dämpfen. Da dies natürlich nicht möglich ist und aus Platzgründen ein möglichst kurzer Absorber angestrebt wird, stellt eine Länge von 30 cm einen guten Kompromiß dar, mit dem ausreichend genaue Meßergebnisse zu erzielen sind. Zusammen ergibt sich also eine Gesamtlänge des Rohres von 80 cm mit einem Innendurchmesser von 4 cm, so daß das System gut handhabbar ist. Als Rohrmaterial wird vorzugsweise Plexiglas gewählt, so daß man beide Mikrofone sehen kann und eine Fehlmessung zum Beispiel infolge falsch adaptierter Mikrofone vermeidbar ist.

Im Hinblick auf die Auswahl des Referenzmikrofons ist zu berücksichtigen, daß in dem Fall, in dem das Prüfmikrofon bei unterschiedlichen Fequenzen getestet oder sogar vollständige Frequenzgänge aufgenommen werden sollen, ein gerader Fequenzgang des Referenzmikrofons sehr wichtig ist. Erzeugt das Referenzmikrofon bei 1000 Hz und einem Schalldruck von 1 Pa genau 1 V (so wie es kalibriert wurde), so muß es auch bei anderen Frequenzen genau eine Spannung von 1 V bei einem Schalldruck von 1 PA liefern, da ansonsten falsche Ergebnisse mit den Prüfmikrofonen erzielt werden, wenn nicht bei 1 kHz gemessen wird.

Das oben genannte Referenzmikrofon hat den Vorteil, daß es nicht nur relativ preisgünstig ist, sondern auch einen sehr geraden Frequenzgang im Bereich zwischen 100 Hz und 4 kHz aufweist.

Ferner ist sicherzustellen, daß beide Mikrofone dem gleichen Schalldruck ausgesetzt sind. Dies ist in einem Rohr besonders einfach zu gewährleisten, da in jedem beliebigen Rohrquerschnitt mit Ausnahme einer ganz dünnen Randschicht der gleiche Schalldruck herrscht. Durch Division der beiden Mikrofonspannungen erhält man somit direkt die Empfindlichkeit des Prüfmikrofons bezogen auf 1 V / 1 Pa. Der zwanzigfache Logaritmus des Quotienten ergibt dann die Empfindlichkeit in dB bezogen auf 1 V / 1 Pa. Wenn der Frequenzgang gerade ist, läßt sich die Empfindlichkeit des Prüfmikrofons auch bei anderen Frequenzen auf diese Weise ermitteln.

Zur Kalibration des Referenzmikrofons auf 1 V / 1 Pa sind im wesentlichen zwei Dinge erforderlich:

a) eine geeichte Schallquelle mit bekanntem Schalldruck und

b) ein verstellbarer Verstärker für das Referenzmikrofon.

Als geeichte Schallquelle kann ein Mikrofonkalibrator von Brüel und Kjar verwendet werden. Dieser erzeugt einen Sinuston von 1 kHz mit einem Schalldruck von 94 dB, daß heißt einen Schalldruck von 1 Pa. Da jedoch das oben genannte Referenzmikrofon nicht in die für die Kalibration vorgesehene Öffnung paßt, ist die Kalibrierung des ausgewählten Referenzmikrofons etwas umständlicher, als im Normalfall. Folgende Geräte werden für die Kalibration des Referenzmikrofons benötigt:

- ein Kalibrator von Brüel und Kjar mit 94 dB (1 Pa),

- ein Messmikrofon mit 1/4 Zoll der gleichen Firma,

- ein Mikrofonverstärker für das 1/4-Zoll-Mikrofon (einstellbar),

- ein Lautsprecher,

- zwei Einspannvorrichtungen für beide Mikrofone,

- ein Sennheiser Back-Elektret-Druckmikrofon (das spätere Referenzmikrofon),

- Verstärker und Spannungsversorgung für das Sennheisermikrofon,

- FFT-Analyzer, falls vorhanden, ansonsten ein Multimeter.

Die Kalibration des Sennheisermikrofons erfolgt in der Weise, daß zunächst das Messmikrofon von Brüel und Kjar durch Verstellen des Verstärkers des Messmikrofons auf genau 1 V / 1 Pa kalibriert wird. Anschließend wird dieses Mikrofon zusammen mit dem Sennheisermikrofon vor dem Lautsprecher befestigt, und zwar in der Weise, daß sich beide Mikrofone stirnseitig gegenüber stehen und ihr Abstand möglichst klein ist. Auf diese Weise ist sichergestellt, daß beide Mikrofone dem gleichen Schalldruck ausgesetzt sind. Zur eigentlichen Kalibration des Sennheisermikrofons kann nun entweder die Lautsprecherspannung so eingestellt werden, daß das Messmikrofon von Brüel und Kjar wieder genau 1 V erzeugt oder der Verstärker des Sennheisermikrofons wird solange verstellt, bis auch dieser 1 V liefert. In diesem Fall ist das Sennheisermikrofon ebenfalls auf 1 V / 1 Pa kalibriert. Dieses Vorgehen hat nur den Nachteil, daß Umweltgeräusche den Schalldruck an den Mikrofonen verändern und eine exakte Einstellung auf 1 V relativ schwierig ist.

Aus diesem Grund wird folgendes Vorgehen bevorzugt: Als Spannungsquelle des Lautsprechers wird der interne Tongenerator des FFT-Analyzers benutzt (z.B. 1 V mit weißem Rauschen einstellen). Zunächst wird das Meßmikrofon von Brüel und Kjar an den Kanal a des FFT-Analyzers angeschlossen. Ferner wird das Sennheisermikrofon mit dem Kanal b des FFT-Analyzers verbunden. Anschließend wird eine Frequenzganganalyse durchgeführt, bei der der FFT-Analyzer beide Signale auf Kanal a und Kanal b analysiert, sie zueinander in Verhältnis setzt und das Ergebnis graphisch in Abhängigkeit von der Frequenz darstellt. Hierbei handelt es sich um eine Art Vierpolmessung, bei der das Meßmikrofon von Brüel und Kjar die Eingangsgröße und das Sennheisermikrofon die Ausgangsgröße mißt. Der dargestellte Frequenzgang ist somit der Frequenzgang des Sennheisermikrofons. Der Verstärker des Sennheisermikrofons wird solange verstellt, bis der Frequenzgang genau bei 0 dB liegt, das heißt beide Mikrofone jeweils die gleiche Spannung bei verschiedenen Frequenzen erzeugen. Damit ist die Kalibration des Sennheisermikrofons abgeschlossen.

Dieses Vorgehen hat den Vorteil, daß Umweltgeräusche und Spannungsschwankungen am Lautsprecher keine Rolle spielen, da nur das Spannungsverhältnis beider Mikrofone betrachtet wird. Eine Schalldruckänderung durch Umweltgeräusche beeinflußt beide Mikrofonspannungen in gleicher Weise, so daß das Verhältnis der Spannungen immer konstant bleibt.

Das Referenzmikrofon ist somit auf 1 V / 1 Pa kalibriert und hat einen sehr geraden Frequenzgang, der ausgezeichnet zum Vermessen beliebiger Mikrofone und zum Bestimmen von deren Empfindlichkeit geeignet ist.

**Patentansprüche**

1. Vorrichtung zur Messung der Charakteristik eines Mikrofons, insbesondere eines Druck- oder Richtmikrofons, unter Freifeldbedingungen mit im wesentlichen ebenen Wellenfronten, gekennzeichnet durch einen rohrförmigen Schallwellenleiter (10) zur Erzeugung eines Schallfeldes, in dem das Mikrofon (2) zur Messung seiner Charakteristik angeordnet ist.

2. Vorrichtung nach Anspruch 1, dadurch gekennzeichnet, daß der Schallwellenleiter ein Rohr (10) ist.

3. Vorrichtung nach Anspruch 1 oder 2, dadurch gekennzeichnet, daß das Mikrofon (2) innerhalb des Rohres (10) angeordnet ist.

4. Vorrichtung nach einem der Ansprüche 1 bis 3, dadurch gekennzeichnet, daß an einer Eingangsöffnung des Rohres ein Lautsprecher (1) als Schallquelle angeordnet ist.

5. Vorrichtung nach einem der vorhergehenden Ansprüche, dadurch gekennzeichnet, daß das Rohr (10) einen für Schallwellen im wesentlichen reflexionsfreien Abschluß (11) aufweist.

6. Vorrichtung nach Anspruch 5, dadurch gekennzeichnet, daß der Abschluß (11) durch einen mit einem schallabsorbierenden Material gefüllten Endabschnitt des Rohr (10) gebildet ist.

7. Vorrichtung nach Anspruch 6, dadurch gekennzeichnet, daß der Übergang in das schallabsorbierende Material fließend ist.

8. Vorrichtung nach Anspruch 6 oder 7, dadurch gekennzeichnet, daß das Material porös ist.

9. Vorrichtung nach einem der Ansprüche 6 bis 8, dadurch gekennzeichnet, daß das schallabsorbierende Material Watte ist.

10. Vorrichtung nach einem der vorhergehenden Ansprüche, dadurch gekennzeichnet, daß ein Referenzmikrofon (3) vorgesehen ist, das neben dem zu messenden Mikrofon (2) angeordnet ist.

11. Vorrichtung nach einem der vorhergehenden Ansprüche, dadurch gekennzeichnet, daß das Mikrofon (2) zur Messung seiner Richtcharakteristik drehbar gelagert ist.

12. Vorrichtung nach einem der vorhergehenden Ansprüche, dadurch gekennzeichnet, daß bei einem Meßbereich des Mikrofons (2) zwischen Frequenzen von 100 Hz und 4 kHz das Rohr (10) einen Innendurchmesser von etwa 4 cm und eine Länge von etwa 80 cm aufweist und der Abstand zwischen dem an der Eingangsöffnung angeordneten Lautsprecher (1) und dem Mikrofon (2) in dem Rohr etwa 50 cm beträgt.

13. Vorrichtung nach Anspruch 12, dadurch gekennzeichnet, daß der Abschluß (11) durch einen mit einem schallabsorbierenden Material gefüllten Abschnitt des Rohres (10) mit einer Länge von etwa 30 cm gebildet ist, vor dem das Mikrofon (2) angeordnet ist.

**14.** Vorrichtung nach einem der vorhergehenden Ansprüche, dadurch gekennzeichnet, daß das Rohr (10) aus Plexiglas ist.

FIG.1

FIG.2

Ausgang
(1V/1Pa)

Referenzmikrofon

Prüfspann.
Schalter

Anschluß
Prüfling

FIG. 3